# FASCICULE DE BREVET EUROPEEN

(11) **EP 0 704 843 B1**
(45) Date de publication et mention de la délivrance du brevet: **11.04.2001**
(21) Numéro de dépôt: 95402154.9
(22) Date de dépôt: 26.09.1995
(51) Int. Cl.: G11B 7/24, G11B 7/26

(54) **Disque compact comportant un marquage anti-piratage, moule de pressage et procédé de marquage anti-piratage de disques compacts**
CD-Platte mit Kopierschutzmarkierung, Pressform und Verfahren zum Kopierschutzmarkieren von CD-Platten
Compact disk with anti-piracy marking, pressing mould and method of anti-piracy marking for compact disks

(30) Priorité: 28.09.1994 FR 9411589
(43) Date de publication de la demande: 03.04.1996
(73) Titulaire: ODME International B.V., 5503 LP Veldhoven (NL)
(72) Inventeur: Ledieu, Jean, F-78121 Crespieres (FR)
(74) Mandataire: Bentz, Jean-Paul

(56) Documents cités:
- EP-A- 0 374 256
- FR-A- 2 660 474
- FR-A- 2 702 077
- GB-A- 2 250 626
- US-A- 5 293 373

## Description

L'invention concerne un disque compact comportant un marquage anti-piratage. Elle concerne également un moule de pressage et un procédé permettant de fabriquer un tel disque compact.

Actuellement, pour distinguer un original de sa copie non autorisée, différents codes peuvent être apposés sur le disque compact.

L'usage le plus répandu consiste à faire figurer, soit en clair, soit sous forme de codes-barres, un ou plusieurs codes dans la bande d'identification du disque compact. Ces codes peuvent exprimer la référence de l'éditeur, la référence de la société ayant effectué le mastering (fabrication du disque maître et/ou de la matrice de pressage) et la référence de la société ayant effectué le pressage, et ce suivant la place disponible sur cette bande d'identification et les conventions prises entre les différents intervenants.

Ce type de marquage qui est réalisé techniquement lors de l'opération de mastering a le désavantage d'être très facilement contrefait par des sociétés pirates. Pour contrebattre cette situation, l'IFPI a recommandé l'utilisation de codes complémentaires appelés SID-Codes qui sont apposés généralement entre la zone programme et la bande d'identification.

Ces SID-Codes peuvent être apposés à deux niveaux :
- Lors de la phase de mastering : le SID-Code sera alors généré automatiquement par une ROM (mémoire morte) réputée inviolable, dont le contenu représentera le code d'identification de la machine de mastering.
- Lors du pressage : il sera alors gravé directement sur le moule de la presse et donc transféré automatiquement sur chaque disque compact pressé. Ce SID-Code de pressage étant gravé sur un élément mécanique onéreux acquiert ainsi la réputation d'être également inviolable.

Dans tous les cas, qu'il s'agisse de la bande d'identification ou de SID-Codes apposés lors des phases de mastering et de pressage, ces codes sont de petite taille car ils ne peuvent en aucun cas se situer en recouvrement de la surface utilisée pour la zone programme. Cela rend les informations difficiles à lire et à interpréter. Ainsi, le consommateur final est très rarement à même de reconnaître du premier coup d'oeil l'origine des disques compacts qu'il achète, soit parce que ces informations ne sont pas visibles une fois le disque compact emballé, soit parce que les codes sont trop hermétiques.

FR-A-2702077 divulgue un procédé de fabrication d' une matrice de pressage permettant la fabrication de disques optiques comportant sur la même face de substrat, à la fois des informations et des hologrammes destinés à lutter contre les contrefacteurs. Les hologrammes sont disposés dans des zones différentes de celles où sont enregistrées les informations ce qui réduit leurs dimensions et donc leur visibilité. Cet état de la technique sert de base aux préambules des revendications 1,3 et 4.

L'invention vise à pallier ces inconvénients en proposant un disque compact comportant un marquage anti-piratage qui permet au consommateur de parfaitement et immédiatement, lors de son achat, vérifier l'authenticité d'un disque compact.

Elle propose également un procédé de marquage anti-piratage qui allie l'avantage d'être de mise en oeuvre techniquement pointue donc difficilement copiable par les pirates avec celui de ne pas obérer le coût de fabrication du disque maître de la matrice de pressage ainsi que le coût de pressage des disques compacts, une fois sa mise en oeuvre réalisée. De plus, ce procédé permet de réaliser un motif de marquage anti-piratage plus compliqué qui sera ainsi encore plus difficile à copier.

Ce motif de marquage anti-piratage pourra être spécifique à l'éditeur et/ou au presseur et/ou au moule de pressage du disque compact.

L'invention propose aussi un moule de pressage de disques compacts permettant de presser des disques compacts comportant un marquage anti-piratage.

A cet effet, l'invention propose un disque compact constitué d'un substrat comportant sur une de ses faces des microcuvettes représentatives du programme et sur la face opposée un réseau optique constitué de microcuvettes et/ou de microreliefs réfractant les longueurs d'onde de la lumière visible et représentant en clair le motif de marquage anti-piratage.

Selon une caractéristique du disque compact de l'invention ledit réseau optique recouvre toute la surface de ladite face opposée.

L'invention propose également un moule de presse à injection de disques compacts comportant un réseau optique constitué de microreliefs et/ou microcuvettes, réfractant pour les longueurs d'onde de la lumière visible, gravé sur sa face dite plaque miroir opposée à la matrice programme, ledit réseau constituant un motif représentatif d'un marquage anti-piratage.

L'invention propose encore un procédé de marquage anti-piratage de disques compacts comprenant une étape de transfert, lors du pressage du disque compact et sur la face opposée à la face comportant le programme, d'un motif de marquage anti-piratage, le motif constituant un réseau optique constitué de microcuvettes et/ou microreliefs réfractant les longueurs d'onde de la lumière visible.

Selon une caractéristique du procédé de l'invention ledit transfert est effectué sur la totalité de ladite face opposée.

Selon une première variante du procédé de l'invention on réalise de plus une étape de gravure de la plaque miroir opposée à la matrice programme du moule de la presse à injection de disques compacts, dudit motif de marquage anti-piratage en négatif, avant de procéder à ladite étape de transfert.

Selon une autre variante du procédé de l'invention on réalise de plus une étape de gravure dudit motif de marquage anti-piratage sur le substrat d'une matrice qui sera fixée de façon amovible sur la plaque miroir, opposée à la matrice programme, de la presse de disques compacts avant de procéder à ladite étape de transfert.

Selon un premier mode de réalisation des variantes du procédé de l'invention ladite étape de gravure de la plaque miroir du moule ou du substrat de la matrice comprend les étapes de :
- dépôt, sur ladite plaque miroir ou sur ledit substrat d'une couche de résine photosensible de type positif,
- enregistrement du motif de marquage anti-piratage spécifique à un presseur donné dans cette couche de résine photosensible,
- élimination des zones insolées de cette résine photosensible,
- transfert du marquage anti-piratage dans la plaque miroir ou le substrat de la matrice par gravure de cette plaque ou de ce substrat dans les zones qui ne sont plus recouvertes par la résine photosensible, et
- élimination de toute la résine résiduelle.

Selon un second mode de réalisation des variantes du procédé de l'invention ladite étape de gravure de la plaque miroir ou du substrat de la matrice comprend les étapes de :
- dépôt sur ladite plaque miroir ou sur ledit substrat de ladite matrice d'une couche de résine photosensible de type négatif,
- enregistrement dudit motif de marquage anti-piratage dans cette couche de résine photosensible,
- élimination des zones non insolées de résine photosensible,
- transfert dans la plaque miroir ou le substrat de la matrice du motif de marquage anti-piratage par gravure de cette plaque miroir ou de ce substrat dans les zones qui ne sont plus recouvertes de résine photosensible, et
- élimination de toute la résine résiduelle.

D'autres buts, détails et avantages de la présente invention apparaîtront plus clairement à la lecture de la description détaillée qui va suivre faite en référence aux dessins annexés dans lesquels.

La figure 1 représente une vue schématique en coupe transversale d'un demi-disque compact de l'art antérieur.

La figure 2 représente une vue schématique en coupe transversale d'un demi-disque compact selon l'invention.

Dans ces figures, l'axe noté X-X représente l'axe de rotation de ces disques compact.

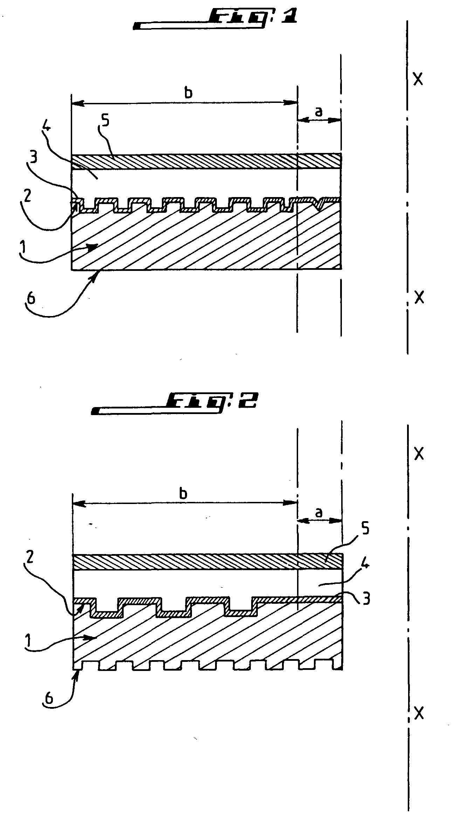

Comme on peut le voir en figure 1, le disque compact de l'art antérieur est constitué d'un substrat 1, transparent dans le domaine des longueurs d'onde émises par la diode laser du lecteur de disque compact et dans le domaine des longueurs d'onde du visible, généralement en polycarbonate, comportant sur sa face 2, d'une part, dans la zone notée b et désignée ci-après zone programme, une succession de microcuvettes représentatives du programme c'est-à-dire de l'information à lire par le lecteur de disques compacts et d'autre part, dans la zone centrale notée a, un code propre à une matrice de pressage et/ou à une machine de pressage donnée.

La totalité de cette face 2 est recouverte d'une couche 3 faite d'un matériau réflecteur dans le domaine des longueurs d'onde émises par la diode laser du lecteur de disque compact, la couche 3 étant elle-même recouverte d'une couche 4 de protection généralement en résine époxy.

En final, une étiquette 5 comportant en clair des informations permettant au consommateur d'identifier la nature du programme est déposée sur la couche 4 de protection.

Dans le disque compact de l'art antérieur, la face 6 opposée à la face 2 ne comporte aucune information lisible, que ce soit à l'oeil nu ou grâce à un lecteur de disques compacts dans la zone programme.

Comme on le voit, dans ce qui précède, l'espace disponible dans la zone a qui est réservé au code d'authentification du disque compact ne permet pas d'utiliser des caractères de taille suffisante pour être facilement lisibles à l'oeil nu et/ou de réaliser un graphisme plus compliqué qui serait difficile à reproduire.

En contraste au disque compact de l'art antérieur et comme illustré en figure 2, le marquage anti-piratage sera réalisé par création de microcuvettes et/ou microreliefs réfractant les longueurs d'onde de la lumière visible, sur la face 6 du disque compact opposée à la face 2 comportant le programme. Ce marquage anti-piratage représentera un motif spécifique et constituera un réseau optique ou une pluralité de réseaux optiques qui ne perturberont pas la lecture du programme lui-même.

A cet effet, la taille, le pas, la profondeur ou l'épaisseur des microcuvettes et/ou microreliefs constitutifs du ou des réseaux optiques et diffractant les longueurs d'onde de la lumière visible seront calculés de manière à maximiser l'effet optique pour l'oeil humain tout en n'affectant pas l'ordre zéro du faisceau laser de lecture du programme pressé sur la face 2 du disque compact. Le principe de la non perturbation, à l'ordre 0, du faisceau laser de lecture du programme a déjà été démontré par ailleurs et ne sera pas repris ici.

Dans ce qui suit, les termes "réseau optique" désignent aussi bien un seul réseau optique qu'une pluralité de réseaux optiques.

Ici, le pas du réseau constituant le motif de marquage anti-piratage sera de préférence compris entre environ 700 nm et environ 1600 nm, la taille des microcuvettes et/ou des microreliefs constitutifs des réseaux sera comprise entre environ 300 nm et environ 2000 nm et la profondeur des microcuvettes et/ou l'épaisseur des microreliefs sera comprise entre environ 50 nm et environ 200 nm.

Ce réseau étant réalisé sur la face 6 opposée à celle comportant le programme, on dispose de toute la surface de cette face 6, ce qui permet alors de réaliser un motif de marquage anti-piratage de taille suffisante pour être immédiatement et facilement lisible et identifiable par le consommateur moyen. On pourra ainsi réaliser un graphisme plus compliqué qu'une simple suite de lettres et/ou de chiffres tel que par exemple un logo etc... .

Afin de permettre au consommateur de vérifier lors de son achat, l'authenticité du disque compact sans ouvrir le boîtier et le suremballage, on pourra rendre la face 6 ainsi marquée visible de l'extérieur par exemple par utilisation d'un boîtier transparent.

Afin d'améliorer la lisibilité de ce marquage anti-piratage, lisibilité perturbée par la présence défocalisée de la couche 3 de matériau réflecteur, on pourra avantageusement introduire dans le matériau constituant le substrat du disque compact un colorant transparent pour les longueurs d'onde émises par le faisceau laser de lecture et relativement opaque pour l'oeil humain.

Le disque compact de l'invention est obtenu par pressage dans une presse à injection, pressage au cours duquel le motif de marquage anti-piratage est transféré sur la face 6 du disque compact en même temps que le programme.

Le procédé classique de fabrication de disques compacts consiste à d'abord réaliser une matrice, habituellement en nickel, comportant le programme à lire ultérieurement notée ici matrice programme, à placer cette matrice sur une des faces d'un moule de presse à injection et à ensuite presser le disque compact lui-même.

Dans ce procédé, la face opposée, dite plaque miroir, à celle sur laquelle la matrice programme est fixée, est lisse.

Pour réaliser la matrice programme, toutes les techniques connues sont applicables.

L'une d'entre elles consiste à déposer sur un substrat, généralement en verre, une couche de résine sensible à une contrainte, à enregistrer le programme dans cette couche de résine par application de la contrainte appropriée, à développer la résine sensible par élimination des zones transformées puis à transférer le programme dans le substrat, par gravure par plasma ou chimique dans le substrat. Les zones de résine résiduelle sont ensuite éliminées. La résine peut être une résine photosensible auquel cas la contrainte est un faisceau lumineux soit modulé en fonction du programme à enregistrer soit appliqué au travers d'un masque représentatif dudit programme. On a alors obtenu un disque maître qui, après une opération connue en soi de galvanoplastie, amène à la matrice proprement dite.

Contrairement à cet art antérieur et dans un premier mode de réalisation du disque compact de l'invention, le motif de marquage anti-piratage sera gravé sur la plaque miroir, opposée à la matrice programme, de chaque presse à injection de disques compacts.

Dans un second mode de réalisation de l'invention, ce motif de marquage anti-piratage, sera gravé non pas directement sur la face miroir opposée à la matrice programme, mais sur une deuxième matrice qui sera fixée, de façon amovible, par tout moyen approprié sur cette même plaque miroir.

Pour mieux faire comprendre l'objet de l'invention, on va maintenant en décrire à titre d'exemples purement illustratifs et non limitatifs plusieurs modes de mise en oeuvre.

### Exemple 1

Une couche de résine photosensible de type négatif est déposée sur toute la surface utile de la plaque miroir d'un moule de presse à injection. Le motif représentatif du marquage anti-piratage est enregistré par insolation au travers d'un masque dans cette couche de résine photosensible. Il pourra également l'être par insolation séquentielle sur une machine de mastering. Puis on révèle la résine photosensible par élimination des zones non insolées.

Le motif représentatif en négatif du marquage anti-piratage est alors transféré par gravure dans la plaque miroir du moule de la presse à injection, sur une profondeur de 50 nm.

On a ainsi obtenu un moule conforme à l'invention, c'est-à-dire un moule sur la plaque miroir duquel le motif de marquage anti-piratage est représenté par la succession de microreliefs ainsi obtenus. La taille des microreliefs varie de 300 à 2000 nm. La succession de microreliefs constitue un réseau optique réfractant les longueurs d'onde de la lumière du visible et ayant un pas de 1600 nm.

On place ensuite la matrice programme sur la face opposée à la plaque miroir du moule de pressage et on injecte sous pression du polycarbonate auquel on a ajouté un colorant transparent pour la longueur d'onde du faisceau laser de lecture du lecteur de compact disque mais relativement opaque pour l'oeil humain.

On procède ensuite au dépôt d'une couche de matériau réflecteur, d'une couche de protection et d'une étiquette.

Ce mode de réalisation est particulièrement avantageux car il est plus facile de mouler des creux que des reliefs.

Le disque compact ainsi obtenu illustré en figure 2 constitué d'un substrat 1 en polycarbonate, polycarbonate auquel on a ajouté le colorant précédemment décrit, comportant d'une part, sur sa face 2 une succession de microcuvettes réfractant les longueurs d'onde émises par la diode laser de lecture du lecteur de compact disque et représentatives de l'information à lire ultérieurement, face 2 qui est recouverte d'une couche 3 de matériau réflecteur et éventuellement d'une couche de protection 4 et d'une étiquette 5 et, d'autre part sur toute la surface de sa face 6 opposée à la face 2 une succession de microcuvettes représentatives du motif de marquage anti-piratage et constituant un réseau optique de microcuvettes réfractant les longueurs d'onde de la lumière du visible n'affectant pas l'ordre 0 du faisceau émis par la diode laser de lecture du programme pressé sur la face 2 du disque compact.

Ce motif est parfaitement lisible à l'oeil nu, en raison non seulement de la présence du colorant dans le substrat mais également de sa taille.

### Exemple 2

On procède de la même façon qu'à l'Exemple 1 sauf que la résine utilisée est une résine photosensible de type positif. Ce sont alors les zones insolées de cette résine qui sont éliminées. La gravure de la plaque miroir s'effectue ici à une profondeur de 200 nm.

Le moule ainsi obtenu comporte alors un motif représentatif du marquage anti-piratage sur sa plaque miroir, motif constitué par une succession de microcuvettes constituant un réseau optique, ayant un pas de 700 nm, microcuvettes d'une profondeur de 200 nm et réfractant les longueurs d'onde de la lumière du visible. Les étapes suivantes sont identiques à celles décrites à l'Exemple 1.

On obtient ainsi un disque compact conforme à l'invention, illustré en figure 2 constitué d'un substrat 1 en polycarbonate coloré comportant sur sa face 2 une succession de microcuvettes représentatives de l'information à lire par le lecteur de disque compact (programme), face 2 qui est recouverte de la couche 3 de matériau réflecteur et éventuellement d'une couche 4 de protection et d'une étiquette 5. La face 6 opposée à cette face 2 du disque compact de l'invention comporte une succession de microreliefs d'une épaisseur de 200 nm représentatifs du motif de marquage anti-piratage et constituant un réseau de microreliefs réfractant les longueurs d'onde de la lumière du visible couvrant toute la surface de cette face.

### Exemples 3 et 4

Dans ces Exemples, les disques compacts, et les moules de pressage de disques compacts conformes à l'invention sont obtenus suivant les procédures décrites aux Exemples 1 et 2 respectivement sauf que l'on omet l'addition de colorant au polycarbonate constituant le substrat du disque compact.

Dans les Exemples 1 à 4, la gravure de la plaque miroir du moule de pressage des disques compacts, étant de mise en oeuvre très délicate et techniquement pointue, ne peut être facilement réalisée par un pirateur, ce qui confère à ce procédé de marquage anti-piratage une très grande sécurité contre le copiage.

Cependant, une fois la mise en oeuvre de cette gravure de la plaque miroir du moule de la presse à injection réalisée, le coût de fabrication du disque maître et de la matrice de pressage du disque compact ainsi que le coût de pressage du disque compact lui-même n'est que peu affecté.

### Exemple 5

Une matrice, comportant une succession de microcuvettes d'une profondeur de 150 nm ayant une taille comprise entre 50 et 200 nm, et constituant un réseau optique ayant un pas de 700 nm, microcuvettes réfractant les longueurs d'onde émises dans le domaine de la lumière visible et représentatives du motif de marquage anti-piratage souhaité est d'abord réalisée par toute méthode connue, comme pour la fabrication précédemment décrite de la matrice programme.

Ensuite, cette matrice, dite matrice de marquage anti-piratage, est fixée de façon amovible à la plaque miroir du moule de pressage de disque compact par tout moyen approprié.

Les étapes suivantes sont identiques à celles décrites à l'Exemple 1.

On obtient ainsi un disque compact conforme à l'invention.

### Exemple 6

On réalise une matrice de marquage anti-piratage comportant une succession de microreliefs d'une épaisseur de 100 nm, microreliefs constituant un réseau optique réfractant les longueurs d'onde du domaine de la lumière visible et représentatif du motif de marquage anti-piratage.

Les autres étapes sont identiques à celles décrites à l'Exemple 5 et à l'Exemple 1.

On a ainsi obtenu un disque compact conforme à l'invention.

### Exemples 7 et 8

En suivant les procédures décrites aux Exemples 5 et 6 respectivement, sauf que l'on omet l'étape d'ajout du colorant au polycarbonate constituant le substrat de disque compact, on obtient des disques compacts conformes à l'invention.

Dans les Exemples 5 à 8, le motif de marquage anti-piratage étant gravé sur une matrice amovible, le procédé de marquage anti-piratage selon l'invention est d'utilisation plus souple pour le presseur de disques compacts.

Bien entendu, l'invention n'est nullement limitée aux modes de réalisation décrits et illustrés qui n'ont été donnés qu'à titre d'exemple.

Ainsi, le substrat du disque compact pourra être constitué de tout matériau approprié transparent dans le domaine des longueurs d'onde émises par la diode de lecture. De même, le motif de marquage anti-piratage pourra ne recouvrir que certaines zones de la face opposée à celle comportant le programme.

## Revendications

1. Disque compact du type constitué d'un substrat (1) comportant sur une de ses faces (2) des microcuvettes représentatives de l'information à lire par le lecteur de disque compact ou programme caractérisé en ce qu'il comporte de plus sur la face opposée (6) à la face (2) des microcuvettes et/ou de microreliefs réfractant les longueurs d'onde de la lumière visible, représentatifs d'un motif de marquage anti-piratage et constituant un réseau optique.

2. Disque compact selon la revendication 1, caractérisé en ce que ledit réseau optique recouvre toute la surface de la face (6).

3. Moule de presse à injection de disques compacts, caractérisé en ce qu'il comporte un réseau optique, constitué de microreliefs et/ou microcuvettes réfractant pour les longueurs d'onde de la lumière visible, gravé sur la plaque miroir opposée à la matrice programme, ledit réseau constituant un motif représentatif d'un marquage anti-piratage.

4. Procédé de marquage anti-piratage de disque compact, caractérisé en ce qu'il comprend une étape de transfert, lors du pressage du disque compact, sur la face (6) de celui-ci, opposée à la face (2) comportant le programme, d'un motif de marquage anti-piratage, le motif constituant un réseau optique constitué de microcuvettes et/ou de microreliefs réfractant les longueurs d'onde de la lumière visible.

5. Procédé selon la revendication 4, caractérisé en ce que ledit transfert est effectué sur la totalité de ladite face (6).

6. Procédé selon la revendication 4 ou 5, caractérisé en ce qu'il comprend de plus une étape de gravure de la plaque miroir, opposée à la matrice programme, du moule de la presse à injection de disques compacts, dudit motif de marquage anti-piratage en négatif, avant de procéder à ladite étape de transfert.

7. Procédé selon la revendication 4 ou 5, caractérisé en ce qu'il comprend de plus une étape de gravure dudit motif de marquage anti-piratage dans le substrat d'une matrice qui sera ensuite fixée de façon amovible sur la plaque miroir et opposée à la matrice programme de la presse du disque compact, avant de procéder à ladite étape de transfert.

8. Procédé selon la revendication 6 ou 7, caractérisé en ce que ladite étape de gravure de la plaque miroir du moule ou du substrat de ladite matrice fixée de façon amovible sur la plaque miroir du moule de la presse à injection de disques compacts comprend les étapes de :
- dépôt, sur ladite plaque miroir ou sur ledit substrat, d'une couche de résine photosensible de type positif,
- enregistrement du motif de marquage anti-piratage dans cette couche de résine photosensible,
- élimination des zones insolées de cette résine photosensible,
- transfert du motif de marquage anti-piratage dans la plaque miroir ou le substrat de la matrice par gravure de cette plaque ou de ce substrat dans les zones qui ne sont plus recouvertes par la résine photosensible, et
- élimination de toute la résine résiduelle.

9. Procédé selon la revendication 6 ou 7, caractérisé en ce que ladite étape de gravure de la plaque miroir ou du substrat de la matrice fixée de façon amovible sur la plaque miroir du moule de la presse à injection de disques compacts comprend de plus les étapes de :
- dépôt sur ladite plaque miroir ou sur ledit substrat d'une couche de résine photosensible de type négatif,
- enregistrement dudit motif de marquage anti-piratage dans cette couche de résine photosensible,
- élimination des zones non insolées de résine photosensible,
- transfert dans la plaque miroir ou dans le substrat de la matrice, du motif de marquage anti-piratage par gravure de cette plaque miroir ou de ce substrat matrice dans les zones qui ne sont plus recouvertes de résine photosensible, et
- élimination de toute la résine résiduelle.

## Patentansprüche

1. CD-Platte der Art, gebildet aus einem Substrat (1), umfassend auf einer ihrer Seiten (2) die die vom Programm oder vom Lesegerät für CD-Platten zu lesende Information darstellende Mikromulden, dadurch gekennzeichnet, daß sie außerdem auf der Seite gegenüber (6) der Seite (2) Mikromulden und / oder Mikroreliefs umfaßt, die die Wellenlängen des sichtbaren Lichts brechen, die ein Markierungsmotiv zum Kopierschutz darstellen und einen optischen Raster bilden.

2. CD-Platte gemäß Anspruch 1, dadurch gekennzeichnet, daß besagter optischer Raster die gesamte Oberfläche der Seite (6) bedeckt.

3. Einspritzpreßform für CD-Platten, dadurch gekennzeichnet, daß sie einen optischen Raster umfaßt, der aus Mikroreliefs und / oder Mikromulden gebildet wird, die die Wellenlängen des sichtbaren Lichts brechen und auf der der Programm-Matrix gegenüber liegenden Spiegelplatte eingraviert sind, wobei besagter Raster ein Motiv bildet, das eine Kopierschutzmarkierung darstellt.

4. Verfahren zum Kopierschutzmarkieren von CD-Platten, dadurch gekennzeichnet, daß es beim Pressen der CD-Platte auf der Seite (6) derselben auf der der Seite (2) gegenüberliegenden, das Programm umfassenden Seite eine Transferstufe einer Kopierschutzmarkierung umfaßt, wobei das Motiv einen optischen Raster bildet, der aus Mikromulden und / oder Mikroreliefs gebildet wird, die die Wellenlängen des sichtbaren Lichts brechen.

5. Verfahren gemäß Anspruch 4, dadurch gekennzeichnet, daß besagter Transfer auf der gesamten besagten Seite (6) erfolgt.

6. Verfahren gemäß Anspruch 4 oder 5, dadurch gekennzeichnet, daß es darüber hinaus eine Gravurstufe der Spiegelplatte gegenüber der Programm-Matrix der Einspritzpreßform von CD-Platten besagten Motivs der Kopierschutzmarkierung als Negativ vor der Durchführung der besagten Transferstufe umfaßt.

7. Verfahren gemäß Anspruch 4 oder 5, dadurch gekennzeichnet, daß es darüber hinaus eine Gravurstufe des besagten Motivs der Kopierschutzmarkierung im Substrat einer Matrize umfaßt, die anschließend abnehmbar auf der Spiegelplatte und gegenüber dem Matrix-Programm der Presse der besagten CD-Platte vor der Durchführung der besagten Transferstufe befestigt wird.

8. Verfahren gemäß Anspruch 6 oder 7, dadurch gekennzeichnet, daß die besagte Gravurstufe der Spiegelplatte der Form oder des Substrats der besagten Matrize, die abnehmbar auf der Spiegelplatte der Einspritzpreßform der CD-Platten befestigt ist, die folgenden Stufen umfaßt:
- Ablage einer photosensiblen Harzschicht der positiven Art auf der besagten Spiegelplatte oder auf dem besagten Substrat,
- Registrierung des Motivs der Kopierschutzmarkierung in dieser photosensiblen Harzschicht,
- Eliminierung der nicht dem Sonnenlicht ausgesetzten Bereiche dieses photosensiblen Harzes,
- Transfer des Motivs der Kopierschutzmarkierung in die Spiegelplatte oder das Substrat der Matrize durch Gravur dieser Platte oder dieses Substrats in den Bereichen, die nicht durch das photosensible Harz abgedeckt sind, und
- Eliminierung des gesamten restlichen Harzes.

9. Verfahren gemäß Anspruch 6 oder 7, dadurch gekennzeichnet, daß die besagte Gravurstufe der Spiegelplatte oder des Substrats der abnehmbar auf der Spiegelplatte der Einspritzpreßform für CD-Platten befestigten Matrize außerdem die folgenden Schritte umfaßt:
- Ablage einer photosensiblen Harzschicht der negativen Art auf der besagten Spiegelplatte oder auf dem besagten Substrat,
- Registrierung des besagten Motivs der Kopierschutzmarkierung in dieser photosensiblen Harzschicht,
- Eliminierung der nicht dem Sonnenlicht ausgesetzten Bereiche des photosensiblen Harzes,
- Transfer des Motivs der Kopierschutzmarkierung in die Spiegelplatte oder in das Substrat der Matrize durch Gravur dieser Spiegelplatte oder dieses Matrizensubstrats in die Bereiche, die nicht mehr vom photosensiblen Harz abgedeckt sind, und
- Eliminierung des gesamten restlichen Harzes.

## Claims

1. Compact disk of the type consisting of a substrate with one of its faces (2) comprising a set of micropits that are representative of information to be read by the reader of compact disk or programme, characterized in that it further comprises, on its face (6) opposite the face (2), a set of micropits and/or microreliefs which refract the visible light wavelengths, that are representative of an anti-piracy marking and constitute an optical grating.

2. Compact disk according to claim 1, characterized in that said optical grating covers the whole surface of the face (6).

3. Injection press mould for compact disks, characterized in that it comprises an optical grating, consisting of microreliefs and/or micropits which refract the visible light wavelengths, engraved on the mirror plate opposite the programme die, said grating forming a pattern that is representative of an anti-piracy marking.

4. Method of anti-piracy marking for compact disk, characterized in that it comprises a transfer step, upon pressing the compact disk, on the face (6) thereof, opposite the face (2) comprising the programme, of an anti-piracy marking pattern, the pattern forming an optical grating which is formed by micropits and/or microreliefs which refract the visible light wavelengths.

5. Method according to claim 4, characterized in that said transfer is made on the whole of said face (6).

6. Method according to claim 4 or 5, characterized in that it further comprises a step of engraving the mirror plate, opposite the programme die, of the mould of the compact disk injection press, of said anti-piracy marking pattern in negative form, before proceeding to said transfer step.

7. Method according to claim 4 or 5, characterized in that it further comprises a step of engraving said anti-piracy marking pattern in the substrate of a die which will then be fixed in a removable manner on the mirror plate and opposite the programme die of the compact disk press, before proceeding to said transfer step.

8. Method according to claim 6 or 7, characterized in that said step of engraving the mirror plate of the mould or of the substrate of said die that is fixed in a removable manner on the mirror plate of the mould of the compact disk injection press comprises the steps of:
- depositing, on said mirror plate or on said substrate, a photosensitive resin layer of positive type,
- recording the anti-piracy marking pattern in this photosensitive resin layer,
- removing insolated areas of this photosensitive resin,
- transferring the anti-piracy marking pattern into the mirror plate or into the substrate of the die by engraving this plate or this substrate in areas which are no more covered by the photosensitive resin, and
- removing the whole residual resin.

9. Method according to claim 6 or 7, characterized in that said step of engraving the mirror plate or the substrate of the die that is fixed in a removable manner on the mirror plate of the mould of the compact disk injection press further comprises the steps of:
- depositing on said mirror plate or on said substrate a layer of photosensitive resin of the negative type,
- recording said anti-piracy marking pattern in this layer of photosensitive resin,
- removing the non-insolated areas of photosensitive resin,
- transferring into the mirror plate or into the substrate of the die, the anti-piracy marking pattern by engraving this mirror plate or this die substrate in areas which are no more covered by photosensitive resin, and
- removing the whole residual resin.
